# EUROPEAN PATENT APPLICATION

(11) **EP 2 732 691 A2**
(43) Date of publication of application: **21.05.2014**
(21) Application number: 13188378.7
(22) Date of filing: 11.10.2013
(51) Int. Cl.: A01D 87/12

(54) **Grapple for stacking round bales**

(30) Priority: 24.10.2012 US 201261717952 P
(71) Applicant: Haukaas Manufacturing Ltd, Mortlach, Saskatchewan S0H 3E0 (CA)
(72) Inventor: Haukaas, Greg, Mortlach, Saskatchewan S0H 3E0 (CA); Colistro, Vince, Mortlach, Saskatchewan S0H 3E0 (CA)
(74) Representative: Dempster, Benjamin John Naftel

(57) **Abstract**

A grapple is arranged for stacking cylindrical bales, where a bottom row or rows has the axis vertical and a top row has the axis horizontal, and includes a base frame for attachment to front end loader and a grapple frame mounted on the base frame for rotation about a horizontal axis of the base frame. The grapple frame includes two fixed lower jaws side by side and two upper pivotal jaws. The lower jaws are arranged for engaging underneath a bale lying on the ground with its axis horizontal with the lower jaw being shorter in the forward direction than the second jaw so that the lower jaw can approach and engage the bale substantially without pushing underneath the bale and the upper pivotal jaws extend beyond the axis.

## Description

This invention relates to a grapple for stacking round bales and particularly for stacking a bottom row standing with the axis of the bales vertical and a top row of bales with the axis horizontal. In many cases the stacking provides two rows of vertical bales underneath the horizontal top row stacked with a second row on top of the bottom row.

### BACKGROUND OF THE INVENTION

Stacking of bales is particularly important to reduce spoilage by weather.

Traditionally bases are stacked with their axes all horizontal in rows with upper rows stacked onto top of lower rows. This traditional method presents the cylindrical surface of the bale upwardly so that rain and water can be shed to the sides. However where freezing occurs, the cylindrical surface of the bale and the strings holding the bale intact can freeze to the ground preventing the bale from being lifted for use from the stack while remaining intact.

An alternative stacking arrangement has therefore been proposed as defined above where the bottom bales are vertical and a top row of bales is arranged with the axis horizontal for rain shedding. However placing the bales in this arrangement is difficult with existing equipment so that farmers are reluctant to use this technique.

US Patent 4636583 (Bontrager) issued December 14 1982 shows a hanging grapple which lifts a bale from above for loading onto a trailer.

US Patent 5975832 (Winkler) issued November 2 1999; US Patent 6220811 (Bernecker) issued April 24 2001; and US Patent 4552501 (Clark) issued November 12 1985 each show a hanging grapple at the end of a lift arm for loading a trailer which rotates about an axis at right angles to an axis of the lifted bale but is not able to stack the bales vertically.

US Patent 6328520 (Maclay) issued December 11 2001 shows stacking of bales by tilting a truck bed on which they are sitting from an initial horizontal transport position into a vertical position.

US Patent 5647716 (Tilley) issued July 15 1997 shows stacking bales on a trailer by a front end loader having a bale spike.

### SUMMARY OF THE INVENTION

It is one object of the invention to provide an apparatus for stacking bales which can be used for stacking some bales with their axis vertical and some with their axis horizontal.

According to one aspect of the invention there is provided an apparatus for stacking cylindrical bales comprising:
a base frame having a connector arrangement for attachment to a lifting device by which the base frame is fixed relative to the lifting device to be raised and lowered with lifting and lowering movement of the lifting device;
a grapple frame mounted on the base frame;
at least one grapple member mounted on the grapple frame;
said at least one grapple member including first and second jaws movable between an open position and a closed position in which the first and second jaws are wrapped around a bale with an axis of the cylindrical bale extending between the first and second jaws;
a rotatable coupling between the base frame and the grapple frame;
said rotatable coupling being is arranged, with the base frame held stationary by the connector arrangement on the lifting device and the bale held between said first and second jaws, to hold said at least one grapple member in a first position in which an axis of the bale is horizontal;
said rotatable coupling being arranged, with the base frame held stationary by the connector arrangement on the lifting device and the bale held between said first and second jaws, to be rotatable to move said at least one grapple member to a second position in which the axis of the bale is held vertical.

Preferably the grapple frame carries two grapple members each having respective first and second jaws with each grapple member being arranged with the first and second jaws arranged to be wrapped around two separate bales with the axes of the bales lying on a common line.

Preferably the first jaws of the two grapple members form a common first jaw on one side of the bales and the second jaws of the two grapple members comprise two separately operable second jaws on the an opposed side of the bales.

Preferably the jaws of the grapple member are arranged so that said first jaw defines a lower jaw fixed relative to the base frame for engaging underneath a bale lying on the ground with its axis horizontal as the lower jaw is pushed forwardly by the base frame carried on the arms of the loader. Preferably the lower jaw is shorter that the second jaw so that the lower jaw can approach and engage the bale substantially without pushing underneath the bale.

Preferably the second jaw extends over the bale so that a front end of the second jaw extends past an axis of the bale.

Preferably the connector arrangement is arranged to engage two vertically movable lift arms of a loading machine so that the base frame is lifted and lowered vertically.

Preferably the rotatable coupling is arranged such that the grapple frame rotates about a substantially horizontal axis between said first positions.

According to a second aspect of the invention there is provided an apparatus for stacking bales cylindrical comprising:
a base frame having a connector arrangement for attachment to a lifting device by which the base frame is fixed relative to the lifting device to be raised and lowered with lifting and lowering movement of the lifting device;
a first and a second grapple member each mounted on the grapple frame;
said first grapple member including first and second jaws movable between an open position and a closed position in which the first and second jaws are wrapped around a first bale with an axis of the cylindrical bale extending between the first and second jaws;
said second grapple member including first and second jaws movable between an open position and a closed position in which the first and second jaws are wrapped around a second bale with an axis of the cylindrical bale extending between the first and second jaws;
the first and second grapple members being arranged such that the jaws thereof hold the first and second bases with the axes thereof on a common line.

According to a third aspect of the invention there is provided an apparatus for stacking cylindrical bales comprising:
a base frame having a connector arrangement for attachment to a lifting device by which the base frame is fixed relative to the lifting device to be raised and lowered with lifting and lowering movement of the lifting device;
a grapple frame mounted on the base frame;
at least one grapple member mounted on the grapple frame;
said at least one grapple member including first and second jaws movable between an open position and a closed position in which the first and second jaws are wrapped around a bale with an axis of the cylindrical bale extending between the first and second jaws;
wherein the jaws of said at least one grapple member are arranged so that said first jaw defines a lower jaw for engaging underneath a bale lying on the ground with its axis horizontal, which lower jaw is shorter that the second jaw so that the lower jaw can approach and engage the bale substantially without pushing underneath the bale;
and wherein the second jaw extends over the bale so that a front end of the second jaw extends past the axis of the bale.

According to a fourth aspect of the invention there is provided an apparatus for stacking cylindrical bales comprising:
a base frame having a connector arrangement for attachment to a lifting device by which the base frame is fixed relative to the lifting device to be raised and lowered with lifting and lowering movement of the lifting device;
a grapple frame mounted on the base frame;
at least one grapple member mounted on the grapple frame;
said at least one grapple member including first and second jaws movable between an open position and a closed position in which the first and second jaws are wrapped around a bale with an axis of the cylindrical bale extending between the first and second jaws;
wherein the connector arrangement is arranged to engage two vertically movable lift arms of a loading machine so that the base frame is lifted and lowered vertically.

Preferably the apparatus above is used in a combination comprising a loading machine having two vertically movable lift arms wherein the connector arrangement is arranged so that the base frame is fixed rigidly to the lift arms and is lifted and lowered vertically.

While the embodiment shown hereinafter shows two connected grapples on the grapple frame using two upper jaw sections for holding two bales. However the construction can also use a single upper jaw for a device that would grab and rotate one bale at a time. The single bale device can be available to farms who do not have a sufficiently large tractor and loader to work with two bales at a time or who just want to have one bale in the vertical part of their "mushroom" stack.

The stacking grapple as described in more detail hereinafter is an attachment for a loader tractor that will allow the operator to manage two large round bales at one time. The two grapple clamps work independently of each other but are connected to the same hydraulic remote...This allows for the equal amount of force holding the bales in place even if the bales are not of similar size or shape...

An important difference in the grapple attachment herein relative to the prior at set out above is the ability for it to turn the bales from horizontal to vertical in their orientation. Round bales stacked in the vertical orientation will not have their strings freeze to the ground. The row of horizontal bales stacked on top will have better weathering capabilities than the traditional method of stacking bales because the rain is shed to the sides of the vertical bales underneath rather than onto the cylindrical surfaces of the bales in the traditional method.

The advantages to the stacking grapple as described hereinafter over other grapples:
1) it is gentler on the bales so that there is no ripping of the strings or net which typically occurs in conventional arrangements;
2) it easily stacks the bales vertically.

The advantage to the stacking grapple as described hereinafter over a simple spike:
1) it carries two bales relative to a single bale carried on the spike so that it is twice as fast and requires half the trips;
2) it easily stacks the bales vertically.

The lower jaw is fixed. The upper jaw alone is used to clamp the bale.

This allows it to approach a grab bales from the side rather than just from overhead.

The rotating capability is used for different purpose than the patents above, and the maneuvers that it is capable of in combination with the front end loader are different than those illustrated below.

The axis of rotation of the grapple frame relative to the mounting frame is designed to work in a primarily horizontal plane not a vertical place as the devices listed below.

None of the devices above are capable of stacking the bale in a vertical orientation.

### BRIEF DESCRIPTION OF THE DRAWINGS

One embodiment of the invention will now be described in conjunction with the accompanying drawings in which:
Figure 1 is an isometric view of a grapple according to the present invention for attachment to a front end loader or similar lifting machine.
Figure 2 is an isometric view of the grapple of Figure 1 attached to a front end loader or similar lifting machine.
Figure 3 is an isometric view of the grapple of Figure 1 attached to a front end loader or similar lifting machine with the grapple frame and the bales carried thereby rotated through 90 degrees into the vertical orientation.

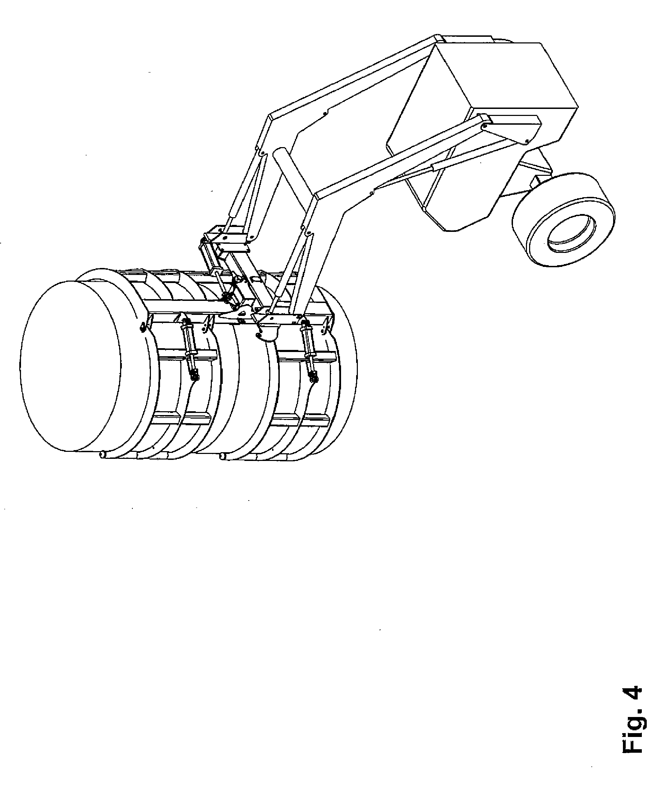

Figure 4 is an isometric view of the grapple of Figure 1 attached to a front end loader or similar lifting machine showing the bales being moved toward the ground for stacking.
Figures 5 and 6 show an array of stacked bales using the grapple described herein.

In the drawings like characters of reference indicate corresponding parts in the different figures.

### DETAILED DESCRIPTION

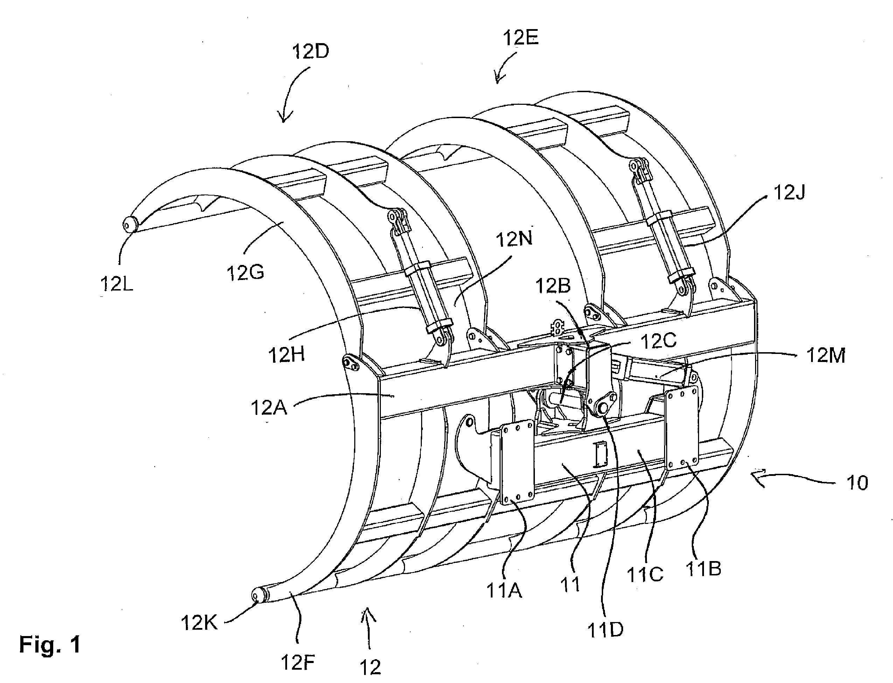

The apparatus 10 for stacking bales is best shown in Figure 1 and includes a base frame 11 for attachment to the arms of a lifting device which are received in two receptacles 11A and 11B. This holds the base frame fixed relative to the lift arms of the loader so that the base frame remains in the orientation fixed by the lift arms and moves vertically with those arms.

The frame includes a cross beam 11C which is held horizontal and a pivot mounting 11D mounted on top of the center of the beam.

The apparatus further includes a grapple frame 12 including a beam 12A mounted on the base frame 11 by a stub 12B at right angles to the beam and extending over the pivot connection 11D for pivotal mounting by a connector 12C. This holds the beam 12A in an initial horizontal position shown parallel to the beam 11C.

The grapple frame 12 carries two separate grapples 12D and 12E. Each grapple member includes a pair of jaws 12F and 12G movable between an open position and a closed position wrapped round a bale. ;

The two separate grapple members have one common lower jaw 12F on the lower side of the bales. On the upper side the two grapples have separate upper jaws 12G which are separately operable jaws.

The common lower jaw is fixed on the beam 12A for engaging underneath a bale lying on the ground and is shorter that the other upper jaw. In this way the lower jaw has a front end 12K which terminates behind the axis of the bale so that the common lower jaw when pushed forwardly by the vehicle can approach and engage a bale lying on the ground after formation by the baler substantially without pushing underneath the bale. The second upper jaw extends over the bale to be lifted so that a front end 12L of the upper jaw extends past an axis of the bale. The points 12K and 12L thus wrap around the bale within the curvature of the jaws to allow lifting of the wrapped bales but the point 12K is behind the axis of the bale and thus does not force itself under the bale. The first bale is supported within the first grapple member so that, with one bale grasped and held, the grapple can be moved to another bale in the field where the lower fixed jaw is again slid under the new bale arranged with its axis aligned with the axis of the bale being carried. The second upper jaw of the second grapple extends over the new bale so that a front end 12L of the upper jaw of the second grapple extends past an axis of the bale.

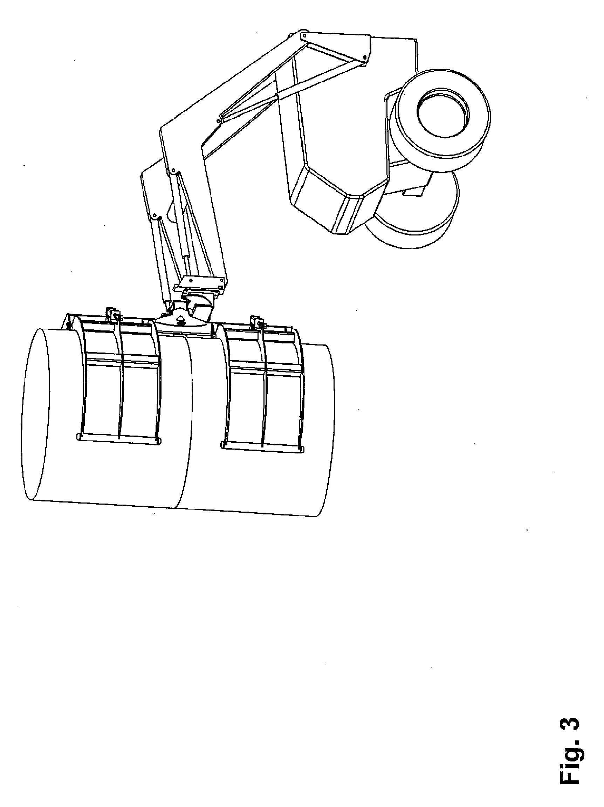

The pivot coupling 11D, 12C between the base frame and the grapple frame is arranged to hold the grapple member in a first position as shown in Figure 1 in which an axis of the bale is horizontal and is rotatable by a drive cylinder 12M to move to a second position in which shown in Figure 3 in which the axis of the bale or bales is vertical.

The two grapple members thus hold the two separate bales arranged on a common axis and end to end.

The mounting frame is arranged to engage the two lift arms of a front end loader or similar machine so that the mounting frame can be lifted and lowered while the grapple frame rotates about a substantially horizontal axis between the horizontal and vertical positions.

The movable jaws 12G are operable simultaneously by cylinders 12H and 12J which are connected together for common operation but also grasp the bales with an equal force despite any differences in diameter. They are thus intended to lift two bales end to end and not to be operated independently. However a single bale can be lifted if positioned in the center symmetrically between the two upper arms.

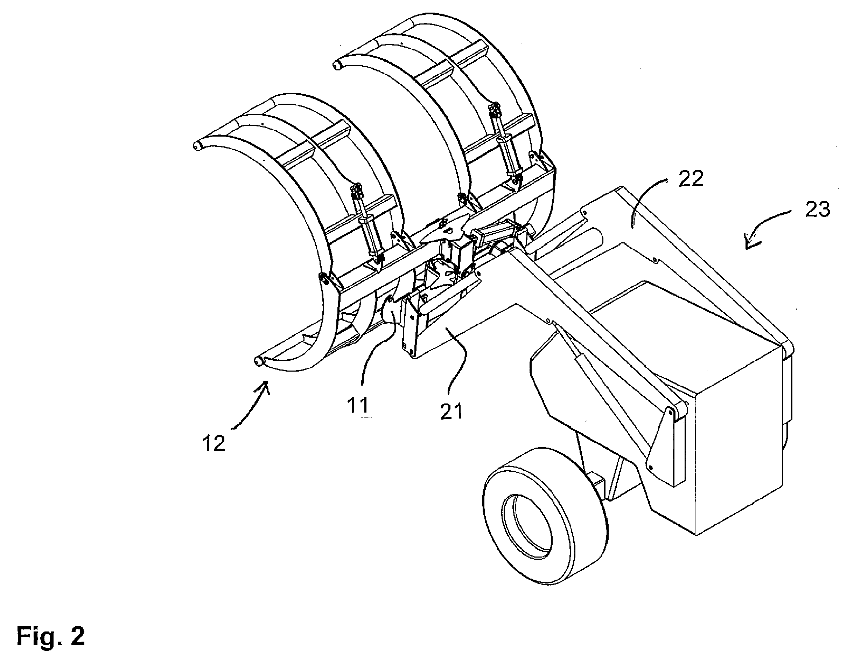

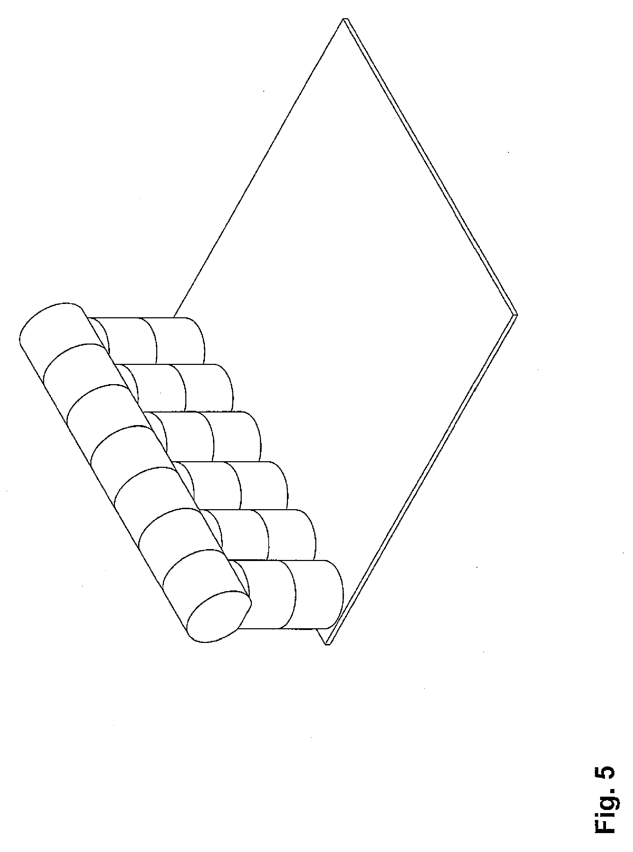

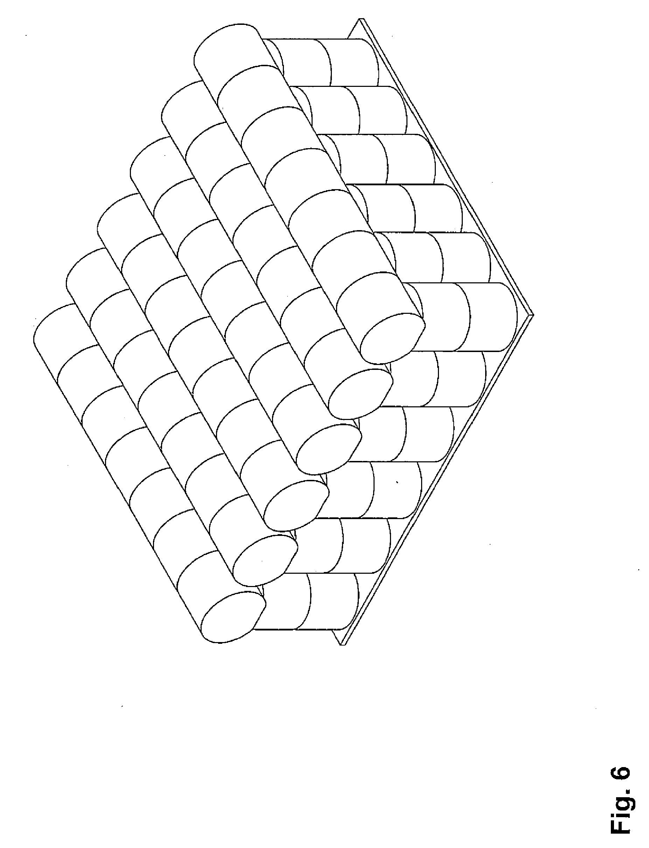

The bales can thus be lifted from the ground with the grapple in the position shown in Figure 2 carried by the loader arms 20 and 21 of a front end loader and can be rotated when required to the position shown in Figure 2 for stacking on the ground with the axis vertical. In this way a stack can be formed as shown in Figures 5 and 6 with the lower bales vertical and the top bales horizontal, which has been shown to provide the best weather protection for the bales.

## Claims

1. An apparatus for stacking cylindrical bales comprising:
a base frame having a connector arrangement for attachment to a lifting device by which the base frame is fixed relative to the lifting device to be raised and lowered with lifting and lowering movement of the lifting device;
a grapple frame mounted on the base frame;
at least one grapple member mounted on the grapple frame;
said at least one grapple member including first and second jaws movable between an open position and a closed position in which the first and second jaws are wrapped around a bale with an axis of the cylindrical bale extending between the first and second jaws;
a rotatable coupling between the base frame and the grapple frame;
said rotatable coupling being is arranged, with the base frame held stationary by the connector arrangement on the lifting device and the bale held between said first and second jaws, to hold said at least one grapple member in a first position in which an axis of the bale is horizontal;
said rotatable coupling being arranged, with the base frame held stationary by the connector arrangement on the lifting device and the bale held between said first and second jaws, to be rotatable to move said at least one grapple member to a second position in which the axis of the bale is held vertical.

2. The apparatus according to claim 1 wherein the grapple frame carries two grapple members each having a respective first and second jaws with each grapple member being arranged with the first and second jaws arranged to be wrapped around two separate bales with the axes of the bales lying on a common line.

3. The apparatus according to claim 2 wherein the first jaws of the two grapple members form a common first jaw on one side of the bales and wherein the second jaws of the two grapple members comprise two separately operable second jaws on the an opposed side of the bales.

4. The apparatus according to any one of claims 1 to 3 wherein the jaws of said at least one grapple member are arranged so that said first jaw defines a lower jaw for engaging underneath a bale lying on the ground with its axis horizontal, which lower jaw is shorter that the second jaw so that the lower jaw can approach and engage the bale substantially without pushing underneath the bale.

5. The apparatus according to claim 4 wherein the second jaw extends over the bale so that a front end of the second jaw extends past an axis of the bale.

6. The apparatus according to any one of claims 1 to 5 wherein the connector arrangement is arranged to engage two vertically movable lift arms of a loading machine so that the base frame is lifted and lowered vertically.

7. The apparatus according to claim 6 wherein the rotatable coupling is arranged such that the grapple frame rotates about a substantially horizontal axis between said first positions.

8. An apparatus for stacking bales cylindrical comprising:
a base frame having a connector arrangement for attachment to a lifting device by which the base frame is fixed relative to the lifting device to be raised and lowered with lifting and lowering movement of the lifting device;
a first and a second grapple member each mounted on the grapple frame;
said first grapple member including first and second jaws movable between an open position and a closed position in which the first and second jaws are wrapped around a first bale with an axis of the cylindrical bale extending between the first and second jaws;
said second grapple member including first and second jaws movable between an open position and a closed position in which the first and second jaws are wrapped around a second bale with an axis of the cylindrical bale extending between the first and second jaws;
the first and second grapple members being arranged such that the jaws thereof hold the first and second bases with the axes thereof on a common line.

9. The apparatus according to claim 8 wherein the first jaws of the first and second grapple members form a common first jaw on one side of the bales and wherein the second jaws of the first and second grapple members comprise two separately operable second jaws on the an opposed side of the bales.

10. The apparatus according to claim 8 or 9 wherein the jaws of said at first and second grapple members are arranged so that said first jaw defines a lower jaw for engaging underneath a bale lying on the ground with its axis horizontal, which lower jaw is shorter that the second jaw so that the lower jaw can approach and engage the bale substantially without pushing underneath the bale.

11. The apparatus according to claim 10 wherein the second jaw extends over the bale so that a front end of the second jaw extends past an axis of the bale.

12. An apparatus for stacking cylindrical bales comprising:
a base frame having a connector arrangement for attachment to a lifting device by which the base frame is fixed relative to the lifting device to be raised and lowered with lifting and lowering movement of the lifting device;
a grapple frame mounted on the base frame;
at least one grapple member mounted on the grapple frame;
said at least one grapple member including first and second jaws movable between an open position and a closed position in which the first and second jaws are wrapped around a bale with an axis of the cylindrical bale extending between the first and second jaws;
wherein the jaws of said at least one grapple member are arranged so that said first jaw defines a lower jaw for engaging underneath a bale lying on the ground with its axis horizontal, which lower jaw is shorter that the second jaw so that the lower jaw can approach and engage the bale substantially without pushing underneath the bale;
and wherein the second jaw extends over the bale so that a front end of the second jaw extends past the axis of the bale.

13. An apparatus for stacking cylindrical bales comprising:
a base frame having a connector arrangement for attachment to a lifting device by which the base frame is fixed relative to the lifting device to be raised and lowered with lifting and lowering movement of the lifting device;
a grapple frame mounted on the base frame;
at least one grapple member mounted on the grapple frame;
said at least one grapple member including first and second jaws movable between an open position and a closed position in which the first and second jaws are wrapped around a bale with an axis of the cylindrical bale extending between the first and second jaws;
wherein the connector arrangement is arranged to engage two vertically movable lift arms of a loading machine so that the base frame is lifted and lowered vertically.

14. A combination comprising:
a loading machine having two vertically movable lift arms;
and an apparatus according to claim 6;
wherein the connector arrangement is arranged so that the base frame is fixed rigidly to the lift arms and is lifted and lowered vertically.

15. A combination comprising:
a loading machine having two vertically movable lift arms;
and an apparatus according to claim 13;
wherein the connector arrangement is arranged so that the base frame is fixed rigidly to the lift arms and is lifted and lowered vertically.
